Europäisches Patentamt

European Patent Office

Office européen des brevets

(11) Veröffentlichungsnummer: **0 228 608 B1**

# EUROPÄISCHE PATENTSCHRIFT

(45) Veröffentlichungstag der Patentschrift: 24.04.91

(51) Int. Cl.⁵: **B29C 67/14**, B29C 67/24

(21) Anmeldenummer: 86117021.5

(22) Anmeldetag: 08.12.86

(54) Kontinuierliches Verfahren zur Herstellung von hochfesten Profilen.

(30) Priorität: 20.12.85 DE 3545457

(43) Veröffentlichungstag der Anmeldung:
15.07.87 Patentblatt 87/29

(45) Bekanntmachung des Hinweises auf die
Patenterteilung:
24.04.91 Patentblatt 91/17

(84) Benannte Vertragsstaaten:
DE FR GB IT

(56) Entgegenhaltungen:
EP-A- 0 022 344
US-A- 4 025 257
US-A- 4 337 190

(73) Patentinhaber: BAYER AG

W-5090 Leverkusen 1 Bayerwerk(DE)

(72) Erfinder: Willenberg, Bernd, Dr.
Feldstrasse 94
W-5060 Bergisch-Gladbach 2(DE)

EP 0 228 608 B1

## Beschreibung

Die Erfindung betrifft ein kontinuierliches Verfahren zur Herstellung von Profilen, z.B. Strängen, Rohren, U- und T-Profilen, aus thermotropen Fasern oder Filamenten.

Als "thermotrop" bezeichnet man solche Substanzen, die flüssig-kristalline Schmelzen bilden. Thermotrope Polymere sind hinreichend bekannt, vgl. z.B. F.E. Mc Farlane et al., Liquid Crystal Polymers II, Contemporary Topics in Polymer Science, Vol. 2, Plenum Publishing Corporation, 1977;
W.J. Jackson und H.F. Kuhfuss, J. Polymer Science, Polymer Chem. Ed. 14 , 2042 (1976);
W. C. Wooten et al. in A. Ciferri "Ultra-high Modulus Polymers", Applied Science Publ., London 1979, S. 362 f.;
A. Blumstein et al., "Liquid Crystalline Order in Polymers", Academic Press 1978;
J. Preston, Angew. Makromol. Chem. 109/110, S. 1-19 (1982);
A. Cifferri, W. R. Krigbaum, R. B. Meyer "Polymer Liquid Crystals", Academic Press, New York, 1982;
P. J. Flor; I. Uematsu, S. P. Papkov, CH. Ober und R. W. Lenz, Advances in Polymer Science 59 (1984);
B. Wunderlich, J. Grebowicz, M. G. Dobb. J. Mc Intyre, H. Finkelmann, G. Rehage, V. P. Shibaev und N. Plate, Advances in Polymer Science 60/61 (1984);
EP 1185, 1340, 8855, 11 640, 15 856, 17 310, 18 145, 18 709, 22 344, 44 205, 49 615;
US 3 991 013, 3 991 014, 4 066 620, 4 067 852, 4 083 829, 4 107 143;
US 3 991 013, 3 991 014, 4 066 620, 4 067 852, 4 083 829, 4 107 143;
WO 79/797, 79/1034, 79/1040.

Der flüssig-kristalline Zustand von Polymerschmelzen läßt sich mit Hilfe eines Polarisationsmikroskops untersuchen: Für die Untersuchungen ist das Okular mit einem Aufsatz ausgerüstet, der eine Fotodiode im Brennpunkt der Okularlinse angeordnet enthält. Anhand eines nachgeschalteten Meßverstärkers mit Regeleinrichtung wird der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergibt sich dann ein Wert von 0,01 Skalenteilen.

Die Schichtdicke der untersuchten Polymerschmelzen beträgt 100 μm.

Die Untersuchung der Polymeren erfolgt nach dem Aufschmelzen der Proben bei Temperaturen zwischen 200 und 400° C. Sofern in diesem gesamten Bereich oder in einem Teil davon eine Aufhellung der zwischen den gekreuzten Nicolschen Prismen beobachteten Schmelze auftritt, wird das Polymere als thermotrop flüssigkristallin eingestuft.

Die flüssig-kristallinen Polymeren zeigen in der Meßanordnung Werte über 1 Skalenteil, meist Werte von 3 bis 90 Skalenteilen. Für amorphe Schmelzen, z.B. aromatische Polycarbonate, werden dagegen Werte von weniger als 0,1 Skalenteil gefunden.

Die oben beschriebene Methode des thermo-optischen Tests (TOT) ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssig-kristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley & Sons, New York, Sydney, Toronto 1974 beschrieben ist.

Verfahren zur Herstellung von Profilen unter Verwendung thermotroper Polymerer sind bekannt. So wird z.B. in der EP-A 117 098 ein Pultrusionsverfahren beschrieben, wonach thermotrope Polymere als Matrix zum Umspritzen von Strängen üblicher Verstärkungsfasern, wie Glas- oder Kohlenstoffasern, verwendet werden. Dabei nutzt man die gute Fließfähigkeit der geschmolzenen thermotropen Polymeren aus; die Schmelze wird über eine Querstromdüse auf den Strang der Verstärkungsfasern aufgebracht. Probleme bereiten dabei die vollständige Durchdringung des Faserstrangs durch die Schmelze sowie die Haftung zwischen Matrixmaterial und Verstärkungsfaser. Über die mechanischen Eigenschaften der nach diesem Verfahren hergestellten Profile wird nichts offenbart.

Überraschenderweise wurde nun ein Verfahren gefunden, das die Herstellung von Profilen außerordentlicher Festigkeit gestattet. So ist es beispielsweise möglich, ohne Faserverstärkung zu Festigkeiten zu gelangen, die man gemäß Stand der Technik nur mit Hilfe von Glasfaserverstärkung erreichen konnte.

Gegenstand der Erfindung ist ein kontinuierliches Verfahren zur Herstellung von Profilen, dadurch gekennzeichnet, daß man Fasern oder Filamente mindestens eines thermotropen Polymeren bündelt, auf eine Temperatur erhitzt, bei der das thermotrope Polymer in anisotroper Schmelze vorliegt, und diese erhitzten Bündel eine Formgebungseinheit durchlaufen läßt.

Die erfindungsgemäß hergestellten Profile erreichen vorzugsweise Zugfestigkeiten von mindestens 500 MPa. insbesondere von mindestens 1000 MPa, und Zug-Elastizitätsmodule von mindestens 35 000 MPa, insbesondere von mindestens 50 000 MPa.

2

Geeignete thermotrope Polymere, die in Form von Fasern oder Filamenten zur Verwendung in dem erfindungsgemäßen Verfahren geeignet sind, umfassen thermotrope Polyester, Polyestercarbonate, Polyesteramide, Polyesterimide, Polythiolester, Polyazomethine und thermotrope Cellulosederivate wie beispielsweise Hydroxypropylcellulose. Sie werden z.B. in der eingangs zitierten Literatur beschrieben, die als Teil unserer Beschreibung betrachtet werden soll. Bevorzugte thermotrope Polymere sind voll-aromatische Polyester auf Basis von aromatischen Dicarbonsäuren, Diphenolen, gegebenenfalls Verzweigungsmitteln und gegebenenfalls Kettenabbrechern.

Der Einzelfaserdurchmesser der zu verwendenden Fasern und Filamente kann 1 bis 100, vorzugsweise 5 bis 50, insbesondere 10 bis 30 $\mu$m, die Länge 10 mm bis endlos und insbesondere 50 mm bis endlos betragen.

Die thermotropen Polymeren werden vorzugsweise in Form von Filamentgarn (Endlosgarn) vorgelegt. Die Stärke des aus dem Garn gebildeten Stranges muß natürlich der gewünschten längenbezogenen Masse des herzustellenden Profils entsprechen. Demnach bestimmt sich bei gegebenem Filamentdurchmesser die Zahl der im zu verformenden Strang enthaltenen Einzelfilamente durch die benötigte Profilstärke. Der für das erfindungsgemäße Verfahren zu verwendende Strang wird vorzugsweise unmittelbar vor der Verformung hergestellt. Dabei werden die Monofile bzw. Filamentgarne von Spulen abgezogen und durch eine geeignete Vorrichtung geordnet zum gewünschten Strang gebündelt. Unter "geordnet" ist dabei ein Zustand zu verstehen, bei dem die Einzelfilamente innerhalb des Stranges streng linear, d.h. gestreckt und parallel, vorliegen, so daß jedes Einzelfilament seinen Platz im Querschnitt des Stranges über die gesamte Stranglänge beibehält. Es empfiehlt sich, eine ausreichende Spannung des Stranges und insbesondere eine gleichmäßige Spannung aller im Strang enthaltenen Einzelfilamente aufrechtzuerhalten, damit diese Ordnung gewährleistet ist.

Unter "Schmelzpunkt" der thermotropen Polymeren soll erfindungsgemäß die Temperatur verstanden werden, bei der im oben beschriebenen thermooptischen Test (TOT) während des Abkühlens eine flüssigkristalline Schmelze letztmalig auftritt. Praktisch kann man dabei so vorgehen, daß man die Temperatur der Schmelze kontinuierlich vermindert und dabei beobachtet, ob sich die Struktur der aufgehellten Bereiche durch Druck auf die Probe noch verändert. Die tiefste Temperatur, bei der sich die Struktur der aufgehelltenBereiche durch Druck auf die Probe noch verändert, wird als Schmelzpunkt bezeichnet. Unterhalb dieser Temperatur ist die beobachtete Struktur eingefroren.

Es empfiehlt sich, den Strang bereits vor dem Eintritt in das formgebende Werkzeug auf die Verarbeitungstemperatur oder zumindestens auf eine Temperatur, die maximal 10˚C unter der Verarbeitungstemperatur liegt, zu erhitzen. Das Aufheizen kann beispielsweise durch eine berührungsfreie Passage eines Ofens oder durch Hochfrequenz-Wechselfelder erfolgen. Die dielektrische Vorheizung ist besonders bei dicken Profilen von Vorteil, da sie eine schnelle und gleichmäßige Aufheizung ermöglicht.

Die Formgebungseinheit muß der Form des gewünschten Profils angepaßt sein. Sie kann beispielsweise aus einer oder mehreren Düsen bestehen, die sich konisch oder trompetenförmig verjüngen. Das Verhältnis von Eintrittsquerschnitt zu Austrittsquerschnitt der Düsenöffnungen ist vorzugsweise größer als 1,10. Dieses Düsenziehverfahren ist jedoch in sehr vielen Fällen nicht anwendbar, da die Kraft, die zum Durchziehen des Faserstranges durch die Düse (n) notwendig ist, leicht die Reißkraft des Stranges bei der Verarbeitungstemperatur übersteigt. Die notwendige Zugkraft setzt sich zusammen aus der Kraft, die zum Verformen des Stranges notwendig ist und der Reibungskraft des Stranges an der Düsenwand. Die Reibungskräfte lassen sich durch geeignete Maßnahmen reduzieren, wie beispielsweise durch Siliconisierung der Düse oder Auskleiden der Düse mit Polytetrafluorethylen, falls dies die Verarbeitungstemperaturen erlauben.

Ist die Zugkraft, die zum Duchziehen des Stranges durch die Ziehdüse(n) notwendig ist, kleiner als die Reißkraft des Stranges bei Verarbeitungstemperatur, läßt sich das Düsenziehverfahren anwenden. Infolge der notwendigen Zugkräfte wird es stets zu einer Verstreckung des Stranges kommen, d.h. die Geschwindigkeit, mit der die Profile abgezogen werden, ist größer als die Geschwindigkeit, mit der der Strang in die Düse eintritt. Da sich der Querschnitt des Profiles im gleichen Verhältnis reduziert, muß dieses Verstreckverhältnis bei der Dimensionierung der Düsen berücksichtigt werden. Der Vorteil des Düsenziehverfahrens besteht darin, daß das Verstrecken zu verbesserten mechanischen Eigenschaften in Richtung des Stranges bzw. Profils führt.

Wegen der Schwierigkeiten beim Ziehdüsenverfahren sind aktiv fördernde Formgebungswerkzeuge, die dem Transport des Stranges während seiner Verformung übernehmen, bevorzugt.

Die notwendigen Kräfte zur Verformung werden hier vom Transportmechanismus aufgebracht; Reibung zwischen Strang und Werkzeug tritt wegen der fehlenden Geschwindigkeitsdifferenz zwischen Oberfläche des Werkzeuges und der Oberfläche des Stranges im Werkzeug nicht auf.

Mittels aktiv fördernden Formgebungswerkzeugen können die Geschwindigkeit des einlaufenden Faser-

EP 0 228 608 B1

stranges und die Abzugsgeschwindigkeit gleich sein; eine Verstreckung wie beim Ziehdüsenverfahren wird dann vermieden. Die Transportgeschwindigkeit des aktiv fördernden formgebenden Werkzeuges wird man der Abzugsgeschwindigkeit anpassen.

Als solche aktiv fördernden Formgebungswerkzeuge kommen beispielsweise gegenläufig angetriebene, beheizte Walzen in Frage, deren Oberflächen Aussparungen aufweisen, wobei dann die Aussparungen der gegeneinander gepreßten Walzen dem Querschnitt des zu erzeugenden Profils entsprechen. Soll beispielsweise ein Rundprofil mit einem Durchmesser von 10 mm hergestellt werden, so kann man als Formgebungseinheiten Walzenpaare verwenden, deren Walzen über den gesamten Umfang je (mindestens) eine halbkreisförmige Nut mit einem Radius von 5 mm aufweisen, die derart plaziert ist, daß die beiden aufeinandergepreßten Walzen einen kreisförmigen Querschnitt mit einem minimalen Durchmesser von 10 mm freilassen.

Zu dieser Art von Formgebungswerkzeugen gehören auch Kombinationen hintereinandergeschalteter Walzenpaare, deren Aussparungen sich von Walzenpaar zu Walzenpaar fortlaufend verengen, bis das letzte Walzenpaar gerade Aussparungen entsprechend dem Querschnitt des gewünschten Profils besitzt. Bei dieser Anordnung sind die Ebenen der in Transportrichtung aufeinanderfolgenden Walzenspalte vorzugsweise coaxial gegeneinander verdreht.

Aktiv fördernde Formgebungswerkzeuge im Sinne der Erfindung sind beispielsweise auch Anordnungen von Walzen bzw. von einem oder mehreren Walzenpaaren, so daß der resultierende, lichte Querschnitt gerade dem Querschnitt des gewünschten Profiles entspricht.

Bevorzugte aktiv fördernde Formgebungswerkzeuge sind beispielsweise auch Paare von beheizten Transportbändern, die so angeordnet sind, daß sie einen Spalt freigeben, der sich vorzugsweise in Transportrichtung verengt, wobei dann die geringste Spaltbreite der Dicke des gewünschten Profils entspricht.

Die Zahl der Ausführungsformen der erfindungsgemäß zu verwendenden Formgebungseinheiten ist entsprechend der Anzahl möglicher Profile sehr vielfältig. Die angegebenen grundsätzlichen Lösungen sind für den speziellen Zweck sinngemäß anzupassen.

An die Formgebungseinheit schließen sich in der Regel eine Abkühlzone, eine Abzugsvorrichtung und gegebenenfalls eine Ablängvorrichtung an.

Eine spezielle Ausführungsform des erfindungsgemäßen Verfahrens kann darin bestehen, daß zusätzlich zu den thermotropen Fasern andere Fasern bzw. Filamente, deren Schmelzpunkt mindestens 10°C, bevorzugt 25°C insbesondere 50°C, oberhalb der Verarbeitungstemperatur liegt, mit in das Formgebungswerkzeug eingezogen werden. Dabei kann es sich bei diesen zusätzlich eingezogenen Fasern bzw. Filamenten um übliche Verstärkungsfasern, wie beispielsweise Glasfasern, C-Fasern, Metallfasern, Aramidfasern, handeln. Ihr Anteil kann bis zu 75 Vol-% des Profiles ausmachen.

In allen Verfahrensvarianten, in denen eine Verarbeitungstemperatur gewählt wird, die unter dem Schmelzpunkt einer der verwendeten Filamentarten liegt, kann auf die Verwendung aktiv fördernder Formgebungseinheiten verzichtet und auf eine oder mehrere Ziehdüsen zurückgegriffen werden.

Eine spezielle Ausführungsform des erfindungsgemäßen Verfahrens besteht darin, daß man den Strang aus thermotropem Polymeren mit einem Strickschlauch aus höherschmelzenden Fasern, wie z.B. Glasfasern, umhüllt und in dieser Form in das Verfahren einsetzt.

Die Verarbeitungsbedingungen sind dabei so zu wählen, daß homogene, vorzugsweise porenfreie Profile entstehen. Bei der Wahl der Parameter Temperatur, Werkzeuggeometrie (und dadurch beeinflußter Druck) und Transportgeschwindigkeit sollte beachtet werden, daß

1. die im Strang enthaltene Luft vollständig entweichen kann, damit lunkerfreie Profile erhalten werden; die Dichte der erhaltenen Profile ist dann gleich der Dichte der reinen thermotropen Polymeren, was zur Prüfung der Frage, ob lunkerfreie Profile entstanden sind, herangezogen werden kann;

2. die Verarbeitungstemperatur so weit oberhalb des Schmelzpunktes der thermotropen Fasern und Filamente gewählt wird, daß sich die Schmelze unter den Verarbeitungsbedingungen zu einem von inneren Grenzflächen freien Profil verformt;

3. die Gesamtheit der Verarbeitungsbedingungen so gewählt werden kann, daß unter Verarbeitungsbedingungen die Struktur der thermotropen Filamente verschwindet, so daß das thermotrope Polymere eine homogene Matrix bildet; und insbesondere

4. die Transportgeschwindigkeit so gewählt wird, daß unter Verarbeitungsbedingungen ein homogenes, von inneren Grenzflächen freies Profil entsteht. Dabei ist die Transportgeschwindigkeit desto kleiner, je dicker das herzustellende Profil ist und je näher die Verarbeitungtemperatur am Schmelzpunkt liegt.

5. Die Verarbeitungstemperatur liegt dabei innerhalb des Existenzbereiches der anisotropen Schmelze, d.h. oberhalb des Schmelzpunktes des Polymeren, bevorzugt bis zu 30°C, insbesondere bis 20°C oberhalb des Schmelzpunktes des Polymeren.

4

6. Die Transportgeschwindigkeit kann dabei je nach Dicke des herzustellenden Profiles zwischen 5 cm/min und 50 m/min liegen.

Die homogene, porenfreie und von inneren Oberflächen freie Beschaffenheit eines erfindungsgemäß hergestellten Profils läßt sich vorzugsweise dadurch überprüfen, daß von dem Profil ein Dünnschnitt bzw. Dünnschliff hergestellt wird, der einer Untersuchung mit einem Lichtmikroskop unterzogen wird. Bei einem erfindungsgemäß hergestellten Profil dürfen die eingesetzten Fasern nicht mehr erkennbar sein, ebensowenig wie Hohlräume, Risse oder Spalte.

Die thermotropen Fasern und Filamente können vor der Verarbeitung zu Profilen, z.B. gemäß US 4 424 184 bzw. 4 183 895, getempert werden (Festphasennachkondensation), um die textilen Daten zu verbessern. Der Temperprozeß kann aber auch an den aus den Fasern bzw. Filamenten hergestellten Profilen durchgeführt oder mit dem erfindungsgemäßen Verfahren kombiniert werden.

Die erfindungsgemäß hergestellten Profile weisen hohe Festigkeit und hohen Zugelastizitätsmodul auf. Sie sind thermoverformbar, lassen sich verschweißen und eröffnen die Möglichkeit, mehrere Profile durch Verpressen zu größeren Einheiten zu laminieren.

Die erfindungsgemäß hergestellten Profile lassen sich beispielsweise zur Herstellung von Verankerungs- und Federelementen, Abspann- und Aufhängevorrichtungen als Zugentlastungselemente in Elektro-, Mikrowellen- und Lichtleitkabeln, als Verstärkungselemente in organischen und anorganischen Matrices, als verschweißbares, laminierbares und thermisch verformbares Konstruktionsmaterial verwenden.

Beispiel

1. Herstellung eines thermotropen Polyestergarns:

In einen beheizbaren 25 1-Kessel aus V4A-Stahl mit Rührer, Stickstoffeinleitung und Destillationsaufsatz wurden die folgenden Substanzen eingefüllt:

```
31,2 Mol = 4,309 g p-Hydroxybenzoesäure,
14,4 Mol = 2,392 g Isophthalsäure,
 2,4 Mol =   399 g Terephthalsäure,
14,4 Mol = 1,586 g Hydrochinon,
 2,4 Mol =   447 g 4,4'-Dihydroxydiphenyl,
76,8 Mol = 7,841 g Acetanhydrid,
 5 g Magnesiumacetat und
 2 g Germaniumdioxid.
```

Nach dreimaligem Evakuieren und anschließendem Belüften mit Stickstoff wurde der Kessel auf 170° C aufgeheizt. Dabei wurde Stickstoff mit einer Durchflußgeschwindigkeit von 20 1/h übergeleitet. Nach 2,5 Stunden bei 170° C wurde die Temperatur innerhalb von 30 Minuten auf 200° C, anschließend innerhalb von 1,5 Stunden auf 250° C, dann innerhalb von 1,5 Stunden weiter auf 300° C erhöht. Bei 300° C wurde zunächst ca. 1 Stunde bei Normaldruck gehalten und dann der Druck im Verlauf von 1,5 Stunden bis auf 20 mbar erniedrigt. Der Kessel wurde mit Stickstoff belüftet, das Produkt durch ein Bodenventil herausgedrückt und granuliert.

Der erhaltene Polyester besaß eine inhärente Viskosität von 0,75 dl/g, gemessen an einer Probe von 0,5 g Polyester in 100 ml p-Chlorphenol bei 45° C.

Oberhalb 235° C bis zur Zersetzungstemperatur wurde eine anisotrope Schmelze beobachtet. Der Polyester wurde mit einem Spinnextruder bei einer Schnecken- und Düsentemperatur von 335° C durch eine Düse mit 30 Löchern (Lochdurchmesser 0,25 mm, Kanallänge 0,5 mm) versponnen. Die Abzugsgeschwindigkeit betrug 250 m/Minute. Das so erhaltene Filamentgarn hatte folgende Eigenschaften:

```
Gesamttiter:      650 dtex
Feinheits-        6,7 cN/dtex = 938 MPa
festigkeit:       _
Bruchdehnung:     2,1 %
(Zugversuch nach DIN 53 835)
Anfangsmodul:     425 cN/dtex = 59 540 MPa
```

2. Herstellung des Profils:

68 Spulen mit dem oben beschriebenen Filamentgarn wurden geordnet durch eine Vorführung zu einem Strang mit einem Gesamttiter von 44 200 dtex gebündelt. Dieser Strang wurde mit einer Geschwindigkeit von 0,1 m/Minute durch ein 50 cm langes, auf 235° C beheiztes Rohr gezogen und durch zwei hintereinander schaltete aktiv fördernde Formgebungswerkzeuge transportiert.

Jedes Formgebungswerkzeug bestand aus zwei 20 mm breiten verchromten Edelstahlwalzen mit einem Durchmesser von 50 cm, die jeweils eine halbkreisförmige Nut mit einem Radius von 1 mm aufweisen. Beide Walzen wurden so gegeneinandergepreßt, daß sich eine kreisförmige Aussparung mit einem Durchmesser von 2 mm ausbildete. Die Walzen waren auf 240° C geheizt und rotierten mit einer Oberflächengeschwindigkeit von 0,1 m/Minute.

Das zweite Formgebungswerkzeug, die der Strang unmittelbar nach dem Verlassen der ersten durchläuft, ist gegenüber der ersten um 90° um die Richtung des Stranges gedreht. Beide Formgebungswerkzeuge sind identisch.

Nach dem Verlassen des zweiten Formgebungswerkzeuges wurde das Profil in einem Wasserbad gekühlt und getrocknet. Die Zugprüfung an den erhaltenen Profilen ergab folgende Werte:

```
Zugfestigkeit: 953 MPa
Bruchdehnung:  1,0 %
Zug-E-Modul:   60 150 MPa
```

**Ansprüche**

1. Kontinuierliches Verfahren zur Herstellung von Profilen, dadurch gekennzeichnet, daß man Fasern oder Filamente mindestens eines thermotropen Polymeren bündelt, auf eine Temperatur erhitzt, bei der das thermotrope Polymer in anisotroper Schmelze vorliegt und diese erhitzten Bündel eine Formgebungseinheit durchlaufen läßt.

2. Verfahren nach Anspruch 1, dadurch gekennzeichnet, daß die Verarbeitungstemperatur bis zu 30° C über dem Schmelzpunkt des thermotropen Polymeren liegt.

3. Verfahren nach Ansprüchen 1 und 2, dadurch gekennzeichnet, daß die Verarbeitungstemperatur bis zu 20° C über dem Schmelzpunkt des thermotropen Polymeren liegt.

4. Verfahren nach Ansprüchen 1 bis 3, dadurch gekennzeichnet, daß man nach einem Düsenziehverfahren arbeitet.

5. Verfahren nach Ansprüchen 1 bis 3, dadurch gekennzeichnet, daß man mit aktiv fördernden Formgebungseinheiten arbeitet.

## Claims

1. A continuous process for the production of profiles, characterised in that fibres or filaments of at least one thermotropic polymer are bundled and heated to a temperature at which the thermotropic polymer is present as an anisotropic melt and this heated bundle is passed through a forming unit.

2. A process according to Claim 1, characterised in that the operating temperature is up to 30 degrees Celsius above the melting point of the thermotropic polymer.

3. A process according to Claims 1 and 2, characterised in that the operating temperature is up to 20 degrees Celsius above the melting point of the thermotropic polymer.

4. A process according to Claims 1 to 3, characterised in that a pultrusion process is employed.

5. A process according to Claims 1 to 3, characterised in that actively conveying forming units are employed.

## Revendications

1. Procédé continu pour la fabrication de profilés, caractérisé en ce qu'on met en faisceaux des fibres ou des filaments d'au moins un polymère thermotrope, on chauffe les faisceaux à une température à laquelle le polymère thermotrope forme une masse fondue anisotrope et on transfère ces faisceaux chauffés dans une unité de formage.

2. Procédé suivant la revendication 1, caractérisé en ce que la température de mise en oeuvre dépasse d'une quantité allant jusqu'à 30 °C le point de fusion du polymère thermotrope.

3. Procédé suivant les revendications 1 et 2, caractérisé en ce que la température de mise en oeuvre dépasse d'une quantité allant jusqu'à 20 °C le point de fusion du polymère thermotrope.

4. Procédé suivant les revendications 1 à 3, caractérisé en ce qu'on opère selon un procédé d'extrusion par des filières.

5. Procédé suivant les revendications 1 à 3, caractérisé en ce qu'on opère avec des unités de formage à transport actif.